Europäisches Patentamt

European Patent Office

Office européen des brevets

Publication number: **0 014 771**

A1

## EUROPEAN PATENT APPLICATION

(21) Application number: 79105400.0

(22) Date of filing: 28.12.79

(51) Int. Cl.³: **B 32 B 21/13**
**B 27 M 3/00**

(30) Priority: 22.02.79 SE 7901615

(43) Date of publication of application:
03.09.80  Bulletin  80/18

(84) Designated Contracting States:
BE DE FR GB NL

(71) Applicant: **AKTIEBOLAGET STATENS
SKOGSINDUSTRIER**
**Sveavägen 59**
**S-10522 Stockholm(SE)**

(72) Inventor: **Isaksson, Seth**
**Lindvägen 18**
**S-54500 Töreboda(SE)**

(74) Representative: **Schmidt-Evers, Jürgen et al,**
**Patentanwälte Dipl.-Ing.H.Mitscherlich**
**Dipl.-Ing.K.Gunschmann Dr.rer.nat.W.Körber**
**Dipl.-Ing.J.Schmidt-Evers**
**Steinsdorfstrasse 10 D-8000 München 22(DE)**

(54) A method of manufacturing wooden laminates by gluing together sawn wood.

(57) From a plurality of boards of non-planed, original-sawn wood, at least each alternate board is divided by sawing the same longitudinally, and a number of the thus obtained board parts or lamellae and optionally a number of non-divided boards are placed together and glued to form a laminate structure or laminated element having a thickness of at least four lamellae. The lamellae are arranged in a manner such that a cut surface [6] originating from the longitudinally sawn boards occurs pairwise with an original board edge surface [7] on the side surfaces of the laminate structure.

Fig.1.b

A METHOD OF MANUFACTURING WOODEN LAMINATES BY GLUING
TOGETHER SAWN WOOD


The present invention relates to a method of manufacturing wooden laminates by gluing together sawn wood.

Previously, wooden laminates have been made by gluing togethe pieces of planed, dried wood, i.e. wood which after drying has been planed to a uniform thickness. When attempting to use non-planed wood, difficulties have arisen owing to the fact that the wood, when drying, shrinks or contracts in different ways (the shrinkage at the outer extremeties of a plank or board can be twice as great as the shrinkage more centrally of said plank or board). Consequently, a piece of original sawn wood of rectangular cross section is, after drying, thinner at the side edges, where drying is more predominant, than at the centre. When gluing such pieces of wood together, the glue joint has a varying thickness, which results in variations in the pressure when pressing the pieces together and gives rise to the risk that differences in thickness at certain locations multiply so that glue joints having a thickness of over 1 mm can occur, all greatly impairing the strength of the joint. By original sawn wood is meant timber as sawn from the log.

According to the present invention there is now provided a method of manufacturing wooden laminates by gluing together pieces of sawn wood, in which method non-planed wood can be used while avoiding the aforementioned disadvantages originating from the drying of the wood. This possibility of using non-planed wood can result in a saving of material of 5-10%, in comparison with the using of only planed wood.

The method according to the invention is characterized in that, of a number of boards of non-planed, original-sawn wood at least each alternate board is divided by sawing the board in its longitudinal direction, and in that a number of thus obtained board parts and, optionally, a number of non-divided boards are placed together and glued to form a laminated element having a thickness of at least four lamellae, said parts and possible non-divided boards being placed together in a manner such that a cut surface formed when dividing said boards longitudinally is located pairwise with an original board edge surface on the side surfaces of the laminated element.

By systematically combining in the described manner lamellae edge sides of, because of shrinkage, somewhat differing thicknesses, the differences in thickness due to shrinkage can be equilized.

In an embodiment of the invention suited for the manufacture of laminates of broad cross-section, the laminated element is formed by arranging an non-divided board at the top and at the bottom of said laminate and arranging between said boards alternately divided and non-divided boards, the divided parts of said divided boards being placed together with the original edge surfaces facing one another. If the divided boards have large knots in the edges thereof or exhibit wanes, these defects can, in accordance with this embodiment, be turned inwardly, thereby improving the appearance of the laminate and also greatly increasing the lateral strength thereof. It is also possible to offset the line along which the board is cut from the centre line of said board by about 10% and when gluing the laminae of the laminated element, to place the board parts with the pair of original edge surfaces alternately on each side of the centre line, thereby to increase the torsional strength of the laminate.

0014771

Laminates of narrower cross section can be manufactured in accordance with an embodiment of the invention, by dividing all the boards into two part boards having at least substantially the same width, and arranging and gluing said part boards in a manner such that the cut surfaces and original edge surfaces of two divided part boards are arranged alternately on top of one another on the sides of the laminated element. The lateral strength of the laminated element is improved when lamellae originating from one and the same board are arranged at intervals of at least three lamellae or in separate laminated elements.

In accordance with a further embodiment suited for manufacturing laminates of narrower cross section, each board is divided longitudinally into three parts each having at least substantially the same width, whereafter the outer board parts are arranged and glued in a manner such that the cut surfaces and original edge surfaces of the boards are located alternately on top of one another on the sides of the laminated element and possibly an inner board part is placed above and/or beneath a pair of said outer board parts or the inner board parts are joined to form a separate laminated element.

Preferably the wood used when practising the invention has already been dried, although wood having a relatively high moisture content (up to 18-20% moisture) can be used. It is essential, however, that all the laminae of a laminated element have the same moisture content.

The invention will now be described with reference to the accompanying drawings, in which

Figures 1a and 1b show in perspective a broad laminated element or laminate structure comprising a plurality of non-planed boards,

Figures 2a and 2b illustrate a narrow laminated element or laminate structure comprising a plurality of non-planed boards, and

Figures 3a, 3b, 3c and 3d illustrate the manner in which a plurality of boards are used to form three narrow laminated elements or laminate structures while using 4771 different embodiments of the method according to the invention.

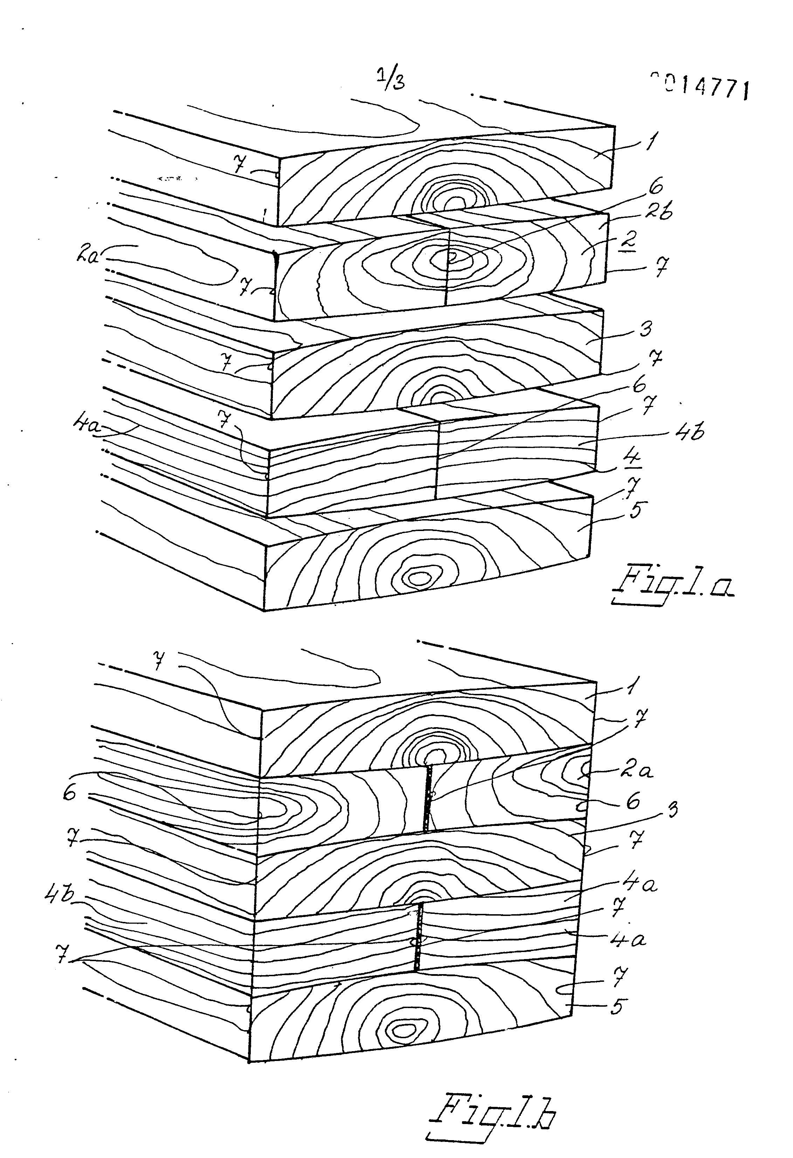

Figure 1a illustrates a plurality of boards 1, 2, 3, 4, 5 of dried non-planed, original-sawn wood (i.e. timber as sawn from the log), each alternate board being sawn longitudinally into two parts or laminae 2a, 2b; 4a, 4b, to form cut surfaces 6. The original edge surfaces of the boards are referenced 7.

As illustrated in Figure 1b, the boards or laminae 1, 3, 5 and the board parts or laminae 2a, 2b; 4a, 4b are placed together in a manner such that the original edge surfaces 7 of the board parts face each other, the cut surfaces 6 thus facing away from each other. Thus the side surfaces of laminate structure thus formed exhibit alternately a cut surface 6 and an original board surface 7.

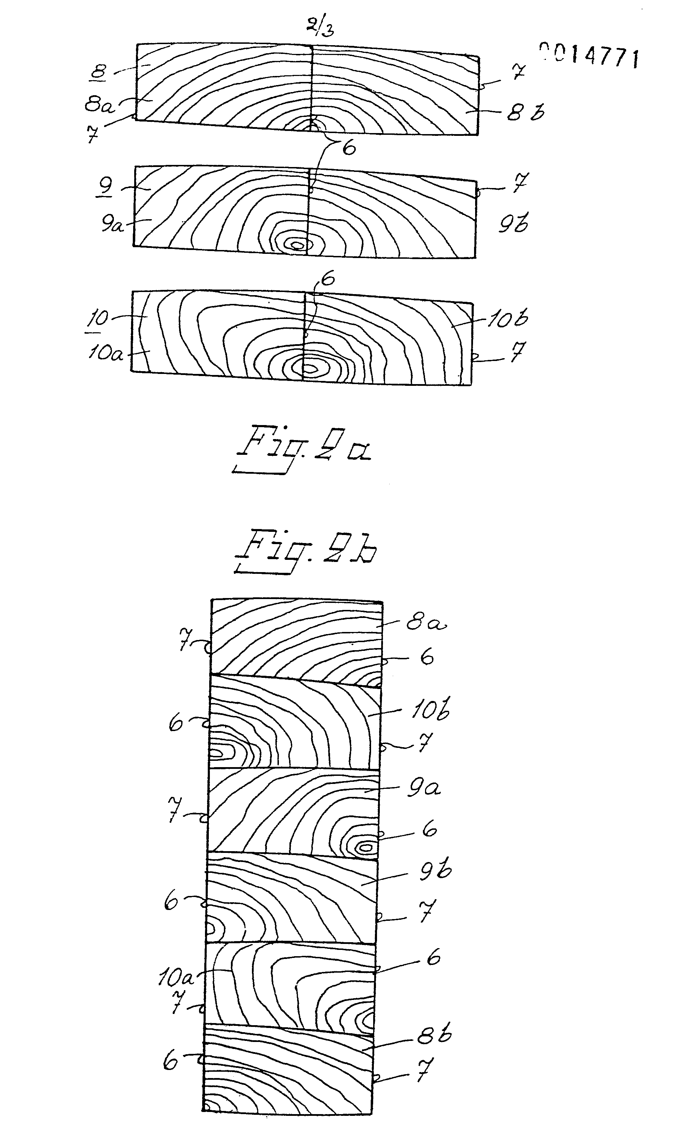

Shown in Figure 2a are three boards or laminae 8, 9, 10 of dried, non-planed, original-sawn wood having original edge surfaces 7. The boards are sawn longitudinally into two parts 8a, 8b; 9a, 9b; 10a, 10b to form cut surfaces 6. These board parts are arranged and glued together to form a laminate structure having six laminae, as shown in Figure 2b, the board parts being turned in a manner such that there is obtained alternately a cut surface 6 and an original board surface 7 on the side surfaces of the laminate.

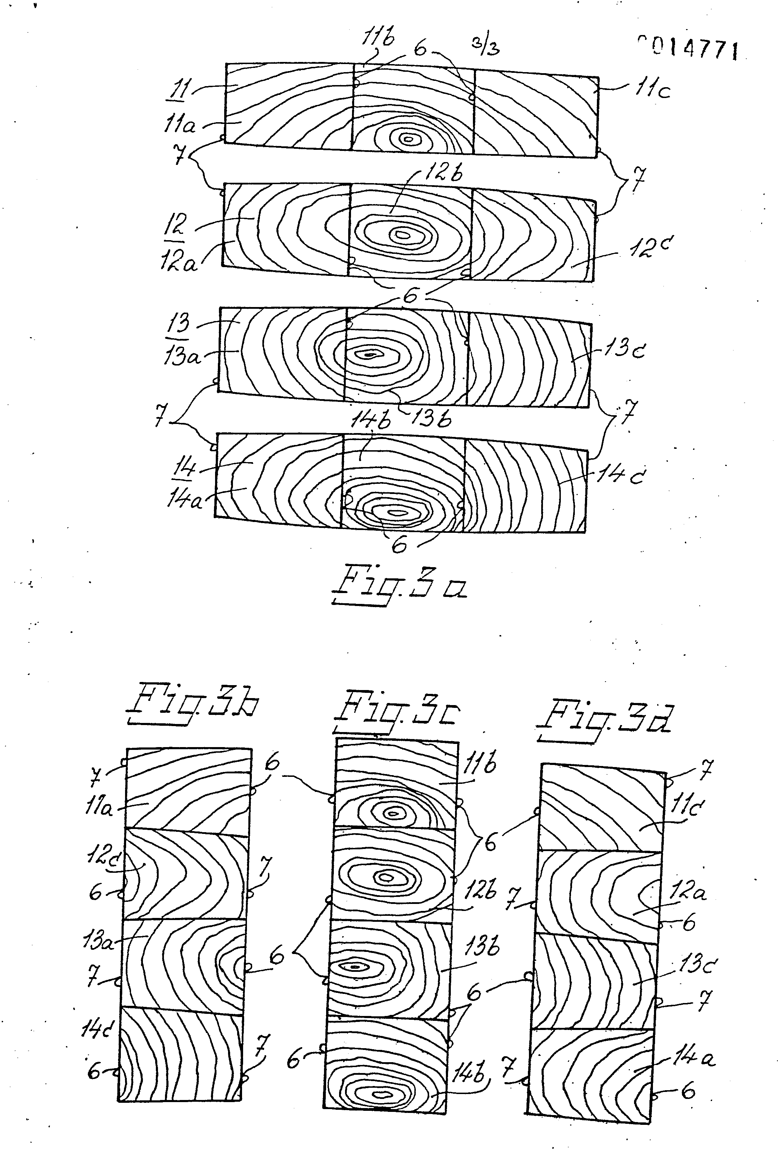

Figure 3a illustrates four boards 11, 12, 13, 14 of dried, non-planed original-sawn wood having original edge surfaces 7. These boards are sawn longitudinally into three parts 11a, 11b, 11c; 12a, 12b, 12c; 13a, 13b, 13c; 14a, 14b, 14c, having cut surfaces 6. Three laminate structures are formed by the said board parts in accordance with the following:

A first laminate structure (Figure 3b) is formed by gluing together the board parts 11a, 12c, 13a and 14c, which are so arranged that a cut surface 6 alternates with an original board edge surface 7 on the side surfaces of the structure.

A second laminate structure (Figure 3c) is formed by gluing the board parts 11b, 12b, 13b, 14b together. These parts constitute core parts and can be glued together directly, since the differences in thickness of such parts are small.

A third element (Figure 3d) is formed by gluing together the board parts 11c, 12a, 13c and 14a, said board parts being arranged in a manner such that a cut surface 6 alternates with an original board edge surface 7 on the side surfaces of the structure.

Laminate structures having the form illustrated in Figures 2b, 3b and 3d will maintain their flatness and straightness in changing humidity better than laminates produced in accordance with conventional methods (gluing together non-divided, dried, planed boards to form a broad laminate structure, which is then divided into narrower structures).

The method according to the invention is not limited to the embodiments illustrated in the drawings, but can be modified in many ways without departing from the original concept.

Thus, in accordance with the invention, the wood need not be dried, but wood having a relatively high moisture content can also be used, as previously mentioned.

In the embodiment shown in Figures 1a and 1b, the boards 2 and 4 have been sawn along their longitudinal centre line. The torsional strength of a wooden laminate structure can be improved by sawing the boards along a line which is offset from the centre line of the boards, and by arranging the board parts with the pair of original board edge surfaces 7 alternately on either side of the centre line (i.e. the surfaces 7 belonging to the board parts 2a and 2b placed to the left and the surfaces 7 of the board parts 4a and 4b placed to the right of the centre line or vice versa).

Instead of being joined to form the laminate structures shown in Figures 3b, 3c and 3d, the board parts illustrated in Figure 3a can be joined together in a manner such that, for example, one of the centre board parts 11b, 12b, 13b and 14b is placed beneath the board part 14c, over the board part 11a or between the board parts 12c and 13a, or centre board parts are placed at several of these locations. Laminate structures can also be formed by gluing together, for example, the board parts 11a, 12c and by placing on either side of said pair of board parts a central board part, such as the board parts 11b and 12b.

## C L A I M S

1. A method of manufacturing wooden laminates by gluing together sawn wood, characterized in that of a plurality of boards (1-5, 8-14) of non-planed, original-sawn wood, at least each alternate board (2, 4, 8-12) is divided by sawing said board in its longitudinal direction; and in that a number of thus obtained board parts and optionally a number of non-divided boards are placed together and glued to form a laminated element having a thickness of at least four lamellae, said parts and possible non-divided boards being placed together in a way such that a cut surface (6) formed when dividing said boards longitudinally is located pairwise with an original board edge surface (7) on the side surfaces of the laminate element.

2. A method according to claim 1, characterized in that the laminated element comprises a top and a bottom non-divided board (1 and 5 respectively) and divided and non-divided boards (2, 4 and 3 respectively) alternating therebetween, the board parts (2a, 2b, 4a, 4b) of the divided boards being placed together with the original board edge surfaces (7) facing one another.

3. A method according to claim 2, characterized in that the line along which the boards are sawn is offset from the centre line of the boards, and in that the board parts 2a, 2b; 4a, 4b) are placed in a manner such that the pair of original board edge surfaces (7) alternate on either side of the centre line.

4. A method according to claim 1, characterized in that all boards (8, 9, 10) are divided into two board parts (8a, 8b; 9a, 9b; 10a, 10b) of at least substantially equal width, said board parts being arranged in a manner such that alternating cut surfaces (6) and original board edge surfaces (7) of two divided board parts are located above one another on the side surfaces of the laminated element.

5. A method according to claim 4, characterized 0014771 that lamellae originating from one and the same board are arranged at intervals of at least three lamellae or in separate laminated elements.

6. A method according to claim 1, characterized in that each board (11, 12, 13, 14) is divided into three board parts or lamellae (11a, 11b, 11c; 12a, 12b, 12c; 13a, 13b, 13c; 14a, 14b, 14c) said board parts having at least substantially equal widths, and in that the outer board parts (11a, 11c; 12a, 12c; 13a, 13c; 14a, 14c) are arranged and glued so that alternately a cut surface (6) and original board edge surface (7) are located above one another on the side surfaces of the laminated element (Figure 3a, 3c), and possibly an inner board part is placed above and/or beneath a pair of said outer board parts, or the inner board parts (11b, 12b, 13b, 14b) are glued together to form a separate laminated element (Figure 3c).

0014771

Fig.1.a

Fig.1.b

0014771

Fig. 2a

Fig. 2b

Fig. 3 a

Fig. 3b    Fig. 3c    Fig. 3d

0014771

European Patent Office

| Category | Citation of document with indication, where appropriate. of relevant passages | Relevant to claim |
|---|---|---|
| | **DOCUMENTS CONSIDERED TO BE RELEVANT** | |
| | FR - A - 1 528 030 (FERMETURES F.M.B. VENDOME)<br>* Entire document * | 1 |
| | -- | |
| A | US - A - 2 942 635 (R.C. HORNE) | |
| A | DE - C - 907 823 (A.E. LUNDBERG) | |
| | ---- | |

**CLASSIFICATION OF THE APPLICATION (Int. Cl.)**

B 32 B 21/13
B 27 M 3/00

**TECHNICAL FIELDS SEARCHED (Int.Cl.)**

B 32 B
B 27 M 3/00
B 27 B 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30-05-1980 | VAN THIELEN |

EPO Form 1503.1   06.78